# EUROPÄISCHE PATENTSCHRIFT

(11) **EP 0 776 807 B1**
(45) Veröffentlichungstag und Bekanntmachung des Hinweises auf die Patenterteilung: **16.05.2001**
(21) Anmeldenummer: 96118820.8
(22) Anmeldetag: 25.11.1996
(51) Int. Cl.: B60T 17/00, B60T 11/32

(54) **Druckluft-Aufbereitungseinrichtung für Kraftfahrzeug-Druckluftanlagen**
Apparatus for processing compressed air for motor vehicle compressed air system
Dispositif pour le traitement de l'air comprimé pour systèmes à air comprimé des véhicules automobiles

(30) Priorität: 30.11.1995 DE 19544621
(43) Veröffentlichungstag der Anmeldung: 04.06.1997
(73) Patentinhaber: Haldex Brake Products GmbH, 69123 Heidelberg (DE)
(72) Erfinder: Hilberer, Eduard, 68766 Hockenheim (DE)
(74) Vertreter: Patentanwälte Rehberg + Hüppe

(56) Entgegenhaltungen:
- EP-A- 0 689 117
- DE-A- 3 506 178
- DE-A- 3 514 989
- DE-A- 4 206 172

## Beschreibung

Die Erfindung betrifft eine Druckluftaufbereitungseinrichtung für Kraftfahrzeug-Druckluftanlagen mit einem Druckregler, einem Lufttrockner und einem Mehrkreisschutzventil, die eine gemeinsame Baueinheit bilden, wobei das Mehrkreisschutzventil für jeden Kreis ein Überströmventil mit begrenzter Rückströmung beinhaltet und jedes Überströmventil eine bewegliche Wand aufweist, die einen Anströmraum von einem Rückraum mit Feder abteilt. Solche Druckluftaufbereitungseinrichtungen weisen zweckmäßig einen Druckregler, einen Lufttrockner und ein Mehrkreisschutzventil auf und stellen damit eine gemeinsame Baueinheit dar, die dem Kompressor einer Druckluftbeschaffungseinrichtung nachgeschaltet ist.

Eine Druckluftaufbereitungseinrichtung der eingangs beschriebenen Art ist aus der DE 35 14 989 A1 bekannt. Dabei ist bereits ein pneumatisch/mechanisch ausgebildetes Mehrkreisschutzventil an das Gehäuse eines Lufttrockners angeflanscht, wobei in dem Gehäuse des Lufttrockners auch ein pneumatisch/mechanisch ausgebildeter Druckregler angeordnet sein kann. Damit entsteht eine pneumatisch/mechanisch aufgebaute Druckluftaufbereitungseinrichtung. Auch die Überströmventile des Mehrkreisschutzventiles jedes Kreises sind pneumatisch ausgebildet. Jedes Überströmventil läßt in bekannter Weise eine begrenzte Rückströmung zu und weist eine bewegliche Wand auf, deren Anströmseite mit der von dem Kompressor herangeführten Leitung verbunden ist, während in dem Rückraum eine Feder angeordnet ist, über die der Öffnungsdruck des Überströmventils festgelegt wird.

Aus der DE 35 06 178 C2 ist ein elektropneumatisch ausgebildeter Druckregler für Druckluftbeschaffungsanlagen von Kraftfahrzeugen bekannt. Der Druckregler besitzt in üblicher Weise ein Gehäuse mit einem Eingangsanschluß und einem zur Atmosphäre führenden Auslaß. An einem Durchgangsanschluß ist üblicherweise eine letztlich zu einem Luftbehälter führende Leitung angeschlossen. Zwischen dem Durchtrittsraum und dem Durchgangsanschluß ist ein Rückschlagventil vorgesehen, welches in Richtung auf den Durchgangsanschluß öffnet und eine Rückströmung in entgegengesetzter Richtung verhindert. Vor dem Rückschlagventil ist ein Auslaßventil gebildet, dem eine Einrichtung zum abwechselnden Öffnen und Schließen zugeordnet ist, die ein Magnetventil aufweist, welches als 3/2-Wege-Magnetventil ausgebildet ist. Es ist ein Drucksensor vorgesehen, der als Druck/Spannungswandler ausgebildet ist und der den Druck nach dem Rückschlagventil, also am Durchgangsanschluß, erfaßt. Das Auslaßventil ist nach Art eines Schnellöseventils mit einer eingespannten Membran ausgebildet. Über eine- elektrische Schalteinrichtung wird das Magnetventil angesteuert, um die Lastlaufphase und die Leerlaufphase des Druckreglers zu steuern. Damit wird ein elektropneumatischer Druckregler geschaffen, der die Funktionen der bisher bekannten mechanisch aufgebauten Druckregler erfüllt.

Der Erfindung liegt die Aufgabe zugrunde, eine Druckluftaufbereitungseinrichtung der eingangs beschriebenen Art bereitzustellen, die auch in Störungsfällen noch Druckluft bereitstellt.

Erfindungsgemäß wird dies bei einer Druckluftaufbereitungseinrichtung der eingangs beschriebenen Art dadurch erreicht, daß zwischen Anströmraum und Rückraum zumindest eines Überströmventils eine die bewegliche Wand überbrückende Umgehungsleitung vorgesehen ist, und daß in jeder Umgehungsleitung jedes Überströmventils ein elektrisch ansteuerbares Magnetventil mit eigenem Entlüftungsanschluß angeordnet und so geschaltet ist, daß in erregtem Zustand das Magnetventil den Entlüftungsanschluß absperrt und den Anströmraum mit dem Rückraum verbindet und in nicht-erregtem Zustand den Anströmraum absperrt und den Rückraum mit der Atmosphäre verbindet.

Die Erfindung geht von dem Gedanken aus, unter Benutzung verläßlich arbeitender pneumatisch/mechanischer Elemente, insbesondere von Überströmventilen mit begrenzter Rückströmung als Bestandteilen eines Mehrkreisschutzventils, elektrisch ansteuerbare Teile, insbesondere ein Magnetventil, zuzuordnen, um auf diese Art und Weise aus einer pneumatisch/mechanischen Baueinheit eine in wesentlichen Bereichen elektrisch funktionierende Baueinheit zu schaffen, die dann wiederum in den verschiedenen Steuerungsmöglichkeiten für die verschiedenen Anwendungsfälle erhebliche Vorteile erbringt. Dabei ist für das elektrisch ansteuerbare Magnetventil zweckmäßig eine Steuerelektronik vorgesehen, die entsprechend den jeweiligen Anwendungsfällen ausgebildet sein kann. Durch dieses elektrisch ansteuerbare Magnetventil läßt sich der Rückraum des Überströmventils entweder belüften oder an die Atmosphäre anschließen, so daß das Überströmventil hierdurch Mehrfachfunktion bekommt. Es funktioniert bei Anschluß des Rückraumes an die Atmosphäre in üblicher Weise, d. h. erbringt die vorteilhaften Funktionen eines Überströmventils mit begrenzter Rückströmung. Wird dagegen der Rückraum mit dem gleichen Druck versorgt wie der Ansteuerraum auf der anderen Seite der beweglichen Wand, dann sorgt die Kraft der Feder im Rückraum dafür, daß das Überströmventil geschlossen wird, also gleichsam als Absperrventil in Funktion tritt. Damit ist es möglich, den betreffenden Kreis, insbesondere im Defektfall, gezielt abzusperren. Dies kommt dann wiederum den anderen, nicht-abgesperrten Kreisen zugute, d. h. ein Notbetrieb kann auch im Störungsfall für diese anderen Kreise aufrechterhalten werden. Wesentlich ist es, das elektrisch ansteuerbare Magnetventil dabei so auszubilden und anzuordnen, daß es in nicht-erregtem Zustand, also stromlos, eine Stellung einnimmt, in der die normale Funktion der pneumatischen Teile des Überströmventils weiterhin gewährleistet ist. Dies bedeutet gleichzeitig, daß bei einem Stromausfall die normale Funktion des Überströmventils mit begrenzter Rückströmung gewährleistet ist. Somit kann der betreffende Kreis in diesem Störungsfall bis zum dynamischen Schließdruck des Überströmventils betrieben werden. Ist dagegen die Stromversorgung intakt, kann im Defektfall jeder gewünschte Kreis abgeschaltet werden, wobei in den nicht-defekten Kreisen die Funktion voll erhalten bleibt. Die Erfindung erbringt den überraschenden Vorteil, daß beispielsweise auf die Anordnung eines Behälters in einem nachrangigen Kreis verzichtet werden kann. Die Luft für den nachrangigen Kreis wird dabei einem vorrangigen Kreis aus dessen Behälter entnommen, und zwar aus einem Kreis, dessen Überströmventil nicht zugehalten wird. Damit ist es möglich, Behälter insbesondere nachrangiger Kreise einzusparen. Da in nachrangigen Kreisen ohnehin oft niedrigere Betriebsdrücke vorgesehen sind als in vorrangigen Kreisen, wird das Behältervolumen der Behälter der vorrangigen Kreise mit dem erhöhten Betriebsdruck sinnvoll und effektiv genutzt. Durch die Zuordnung eines elektrisch steuerbaren Magnetventils zu den pneumatisch/mechanisch ausgebildeten Überströmventilen ergibt sich ein elektropneumatisches Mehrkreisschutzventil, welches auch zum Zwecke einer Druckbegrenzung genutzt werden kann. Ist beispielsweise der gewünschte Betriebsdruck in einem nachrangigen Kreis erreicht, kann über das elektrisch ansteuerbare Magnetventil das betreffende Überströmventil in die Schließstellung überführt werden, die dann zweckmäßig solange andauert, bis ein entsprechender Luftverbrauch in dem betreffenden Kreis stattgefunden hat. Durch die Anschlußmöglichkeit einer elektrischen Steuereinrichtung wird die Grundlage für ganz verschiedene Funktionen und Betriebsweisen der gemeinsamen Baueinheit der Druckluftaufbereitungseinrichtung geschaffen.

Als Magnetventil kann ein 3/2-Wege-Magnetventil vorgesehen sein, also ein Magnetventil mit eigener Entlüftung, über welches das Überströmventil im Sinne eines Öffnens bzw. Schließens angesteuert wird. Ein solches Magnetventil erlaubt die Verarbeitung elektrischer Steuerimpulse. Die pneumatischen Leitungsverbindungen können alle auf kleinstem Raum innerhalb des Gehäuses der gemeinsamen Baueinheit angeordnet werden. Jeder Drucksensor, der zum Erfassen des Druckes nach dem Überströmventil in jedem Kreis vorgesehen ist, kann als Druck/Spannungswandler ausgebildet sein, um auf diese Art und Weise einen elektrischen Impuls zur Verfügung zu stellen, der einfach weiterverarbeitet werden kann. Dieser elektrische Impuls kann auch zur Steuerung des betreffenden Magnetventils oder der Magnetventile anderer Kreise benutzt werden.

In der von dem Überströmventil zumindest eines insbesondere nachrangigen Kreises ausgehenden Leitung kann ein entgegen der Strömungsrichtung schließendes Rückschlagventil angeordnet sein. Dieses Rückschlagventil kann vorzugsweise einstellbar ausgebildet sein, um damit gleichzeitig eine Druckbegrenzung zu erzielen. Es versteht sich, daß insbesondere in mehreren nachrangigen Kreisen solche Rückschlagventile vorgesehen sein können.

Für die Betätigung des oder der Magnetventile kann eine gemeinsame Steuerelektronik vorgesehen sein. In den von den Überströmventilen ausgehenden Leitungen der betreffenden Kreise ist dann zweckmäßig je ein Drucksensor vorgesehen. Die Magnetventile werden von der Steuerelektronik in Abhängigkeit von den von den Drucksensoren erfaßten Drücken gesteuert. Damit sind vielfältige und unterschiedliche Betriebsweisen möglich, und es kann auf die jeweiligen Schadensfälle in entsprechender Weise reagiert werden. Die gemeinsame Steuerelektronik kann mit einer insbesondere in der Fahrerkabine angeordneten Anzeigeeinrichtung verbunden sein. Damit ist für den Fahrer des Kraftfahrzeuges erkennbar, ob und inwieweit die verschiedenen Kreise aufgefüllt sind und ordnungsgemäß zur Verfügung stehen. Die Steuerelektronik sollte programmierbar ausgebildet sein, um verschiedene gewünschte Wirkungsweisen zu realisieren. Die in der Fahrerkabine angeordnete elektrische Anzeigeeinrichtung dient als Manometerersatz, ohne daß es erforderlich wäre, die betreffenden pneumatischen Leitungen bis in die Fahrerkabine zu führen.

Der Lufttrockner der Druckluftaufbereitungseinrichtung kann als regenerierbarer Trockner ausgebildet sein, der auch über die gemeinsame Steuerelektronik steuerbar ist. Dabei ist ein 3/2-Wege-Magnetventil mit nachgeschaltetem Rückschlagventil für die Regeneration vorgesehen. Insoweit kann ein separater Druckluftvorratsbehälter allein für Regenerationszwecke in Fortfall kommen.

Zur Steuerung der Regeneration des Lufttrockners kann ein Feuchtefühler vorgesehen sein, der zweckmäßig in der gemeinsamen Anströmung des Mehrkreisschutzventils angeordnet ist. Über diesen Feuchtefühler wird ein Regenerationslauf des Trockners ausgelöst.

Jedem Rückschlagventil kann ein in die Atmosphäre öffnendes Sicherheitsventil nachgeschaltet sein, welches auf einen Öffnungsdruck zwischen dem Betriebsdruck des betreffenden Kreises und dem Öffnungsdruck eines Auslaßventils des Druckreglers eingestellt ist. Bei unterschiedlichen Betriebsdrücken in den einzelnen Kreisen wird jeder Behälter geschützt.

Die in jedem Rückraum jedes Überströmventils angeordnete Feder kann auf einem einstellbaren Federauflager abgestützt sein. Auf diese Art und Weise kann über eine Stellschraube der Öffnungsdruck des betreffenden Überströmventils eingestellt werden.

Die Erfindung wird anhand bevorzugter Ausführungsbeispiele weiter erläutert und beschrieben. Es zeigen:
- Fig. 1: eine schematisierte Schnittdarstellung der Druckluftaufbereitungseinrichtung in einer ersten Ausführungsform,
- Fig. 2: eine schematisierte Schnittdarstellung der Druckluftaufbereitungseinrichtung in einer zweiten Ausführungsform und
- Fig. 3: einen Schaltplan der Druckluftaufbereitungseinrichtung.

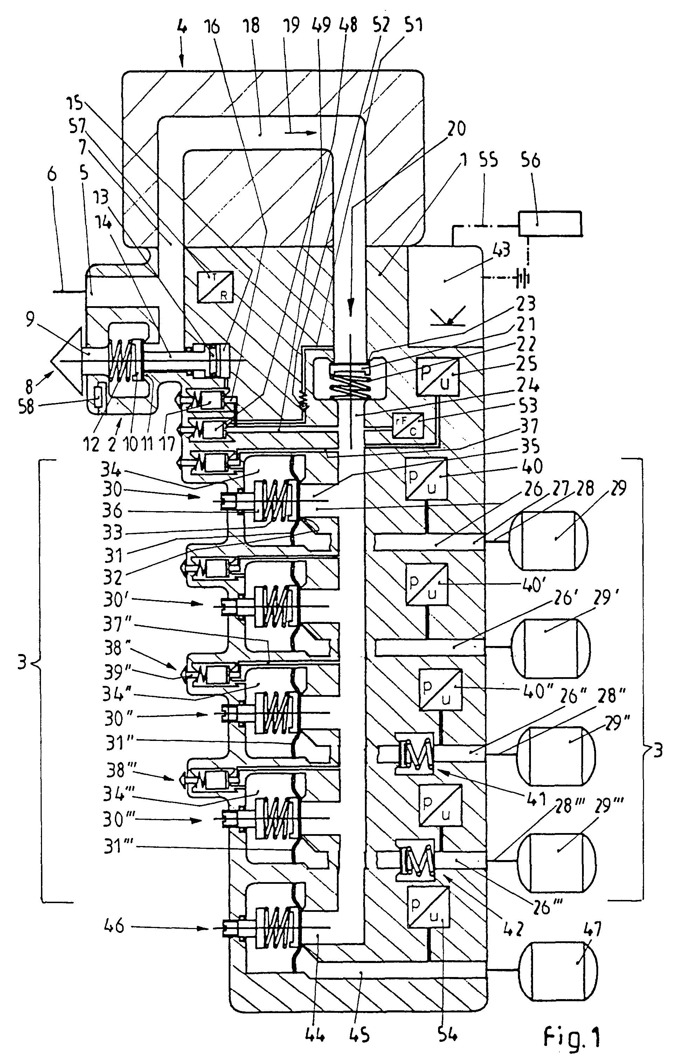

Bei der in Fig. 1 dargestellten Ausführungsform sind in einem gemeinsamen Gehäuse 1 die Elemente eines Druckreglers 2, eines Mehrkreisschutzventils 3 und eines Lufttrockners 4 integriert angeordnet. Das Gehäuse 1 bzw. der Druckregler 2 weist einen Eingangsanschluß 5 auf, zu dem eine von einem nicht dargestellten Kompressor ausgehende Leitung 6 herangeführt ist. Der Eingangsanschluß 5 geht in einen Durchtrittsraum 7 über, an den einerseits ein gesteuertes Auslaßventil 8 angeschlossen ist, welches zu einem in die Atmosphäre führenden Auslaß 9 führt. Das gesteuerte Auslaßventil 8 weist einen Ventilkörper 10 auf, der mit einem eingezogenen Rand 11 am Gehäuse 1 zusammenarbeitet und andererseits auf einer Feder 12 abgestützt ist. Dem Ventilkörper 10 ist ein Kolben 13 mit Stößel 14 zugeordnet. Für den Kolben 13 ist eine Druckkammer 15 vorgesehen, zu der eine Leitung 16 führt, in der ein 3/2-Wege-Magnetventil 17 angeordnet ist.

Andererseits verzweigt sich der Durchtrittsraum 7 im Bereich des Lufttrockners 4 in einen Granulatraum 18, der in der Lastlaufphase von Druckluft in Richtung eines Pfeiles 19 durchströmt wird. Am Ende des Durchtrittsraums 7 bzw. des Granulatraums 18 ist ein Rückschlagventil 20 vorgesehen, welches funktionsmäßig noch zu dem Druckregler 2 gehört bzw. das Ende des Druckreglers 2 darstellt.

Das Rückschlagventil 20 ist als normales Rückschlagventil ausgebildet, d. h. sein Ventilkörper 21 ist auf einer vergleichsweise schwach bemessenen Feder 22 abgestützt und arbeitet mit einem Rand 23 des Gehäuses 1 zusammen. Das Rückschlagventil 20 öffnet in einen Einströmraum 24 des Mehrkreisschutzventils 3. Die Leitung 16 zum 3/2-Wege-Magnetventil 17 der Betätigungseinrichtung 13, 14 des gesteuerten Auslaßventils 8 des Druckreglers 2 ist an den Einströmraum 24 angeschlossen. Ein ebenfalls dort angeschlossener Drucksensor 25 dient dem Erfassen des Druckes in dem Einströmraum 24.

Das Mehrkreisschutzventil 3 ist kreisweise aufgebaut. Für jeden Kreis ist eine von dem Einströmraum 24 abzweigende Zweigleitung 26 vorgesehen, die zu einem Anschluß 27 führt, von dem eine Leitung 28 ausgeht, die zu einem Vorratsbehälter 29 führt. In die Zweigleitung 26 ist ein Überströmventil 30 mit begrenzter Rückströmung eingeschaltet. Jedes Überströmventil 30 besitzt eine bewegliche Wand 31, die mit einem Rand 32 am Gehäuse 1 zusammenarbeitet. Die bewegliche Wand 31 ist auf einer Feder 33 abgestützt, die im Rückraum 34 jedes Überströmventils 30 angeordnet ist. Der Rand 32 schließt mit der beweglichen Wand 31 im Schließzustand des Überströmventils einen Anströmraum 35 ab, der in dauernder Verbindung zu dem Einströmraum 24 steht. Die bewegliche Wand 31 ist hier als umfangsmäßig eingespannte Membran ausgebildet. Die Feder 33 ist auf einem einstellbaren Federauflager 36 abgestützt.

Die bewegliche Wand 31 des Überströmventils 30 ist von einer Umgehungsleitung 37 überbrückt, die den Anströmraum 35 mit dem Rückraum 34 verbindet. In dieser Umgehungsleitung 37 ist ein elektrisch ansteuerbares Magnetventil 38 mit eigenem Entlüftungsanschluß 39 angeordnet. Der Kern des Magnetventils 38 ist auf einer Feder abgestützt und so angeordnet, daß er in der nicht-erregten Stellung den von dem Einströmraum 24 herangeführten Teil der Umgehungsleitung 37 absperrt und gleichzeitig den Rückraum 34 des Überströmventils 30 über den Entlüftungsanschluß 39 mit der Atmosphäre verbindet. In erregtem Zustand des Magnetventils 38 wird dagegen der Entlüftungsanschluß 38 zur Atmosphäre abgesperrt, so daß über die Umgehungsleitung 37 Verbindung zwischen dem Anströmraum 35 und dem Rückraum 34 besteht. Da somit in erregtem Zustand des Magnetventils 38 im Anströmraum 35 und im Rückraum 34 gleiche Drücke herrschen und ansonsten die bewegliche Wand 31 von der Kraft der Feder 33 zusätzlich beaufschlagt wird, wird mit dem Erregen des Magnetventils 38 das Überströmventil 30 geschlossen. Für die Messung des Druckes nach dem Überströmventil 30 des betreffenden Kreises ist ein Drucksensor 40 vorgesehen.

Wie ersichtlich sind die einzelnen Elemente des Mehrkreisschutzventils 3 für vier verschiedene Kreise ausgebildet und angeordnet, wobei zur Unterscheidung die Elemente des zweiten Kreises einmal gestrichen sind, beispielsweise das Überströmventil 30' des Kreises II. Die Elemente des dritten Kreises sind zweimal gestrichen, die Elemente des vierten Kreises dreimal. Damit sind vier Kreise I, II, III und IV geschaffen, wobei die beiden ersten Kreise I und II die Betriebsbremskreise darstellen können, der dritte Kreis III die Druckluftversorgung einer Hilfs- und/oder Feststellbremse übernimmt, während der vierte Kreis IV Nebenverbrauchern zugeordnet ist. Diese vier Kreise sind insoweit parallel angeordnet und weitgehend übereinstimmend aufgebaut und ausgestattet.

In den Zweigleitungen 26" und 26''' der beiden nachrangigen Kreise III und IV sind den jeweiligen Überströmventilen 30" bzw. 30''' nachgeordnet Rückschlagventile 41 bzw. 42 vorgesehen, die so angeordnet sind, daß sie entgegen der Strömungsrichtung schließen. Diese Rückschlagventile können vorteilhaft einstellbar ausgebildet sein und insoweit der Druckminderung dienen.

Für die Steuerung der Magnetventile 38, 38', 38", 38''' sowie der übrigen Magnetventile ist eine gemeinsame Steuerelektronik 43 vorgesehen, die nur schematisch angedeutet ist und über entsprechende elektrische Leitungsverbindungen sowohl mit den Magnetventilen wie auch mit den Drucksensoren usw. in Verbindung steht.

Es ist weiterhin ein Anschluß 44 vorgesehen, von dem eine Leitung 45 über ein Überströmventil 46 zu einem Vorratsbehälter 47 führt, an den die Luftfederung des Kraftfahrzeuges angeschlossen sein möge. Es fehlt hier die Umgehungsleitung 35 sowie ein Magnetventil. Der Vorratsbehälter 47 wird mit dem Druck aufgefüllt, den der Kompressor liefert. Von dem Einströmraum 24 führt eine Leitung 48 zu einem Magnetventil 49 mit einer Entlüftungsöffnung 50. Das Magnetventil 49 ist für die Regeneration des Lufttrockners 4 vorgesehen. Andererseits führt von dem Magnetventil 49 eine Leitung 51 über ein Rückschlagventil 52 unter Umgehung des Rückschlagventils 20 zum Lufttrockner 4. Wenn das Magnetventil 49 erregt wird, wird die Entlüftungsöffnung 50 abgeschlossen, und die Druckluft aus dem Vorratsbehälter 47 strömt über das geöffnete Überströmventil 46 und die Leitungen 48 und 51 rückwärts durch den Granulatraum 18 und nimmt damit die im Granulat abgeschiedene Feuchtigkeit mit. Es versteht sich, daß das gesteuerte Auslaßventil 8 zu diesem Zeitpunkt geöffnet ist und der Kompressor in der Leerlaufphase arbeitet. An den Einströmraum 24 ist ein Feuchtefühler 53 angeschlossen, über dessen Signal die Steuerelektronik 43 das Magnetventil 49 steuert. An die Leitung 45 zu dem Vorratsbehälter 47 ist ein weiterer Drucksensor 54 angeschlossen. Die Steuerelektronik 43 ist über eine elektrische Leitung 55 mit einer Anzeigeeinrichtung 56 verbunden, die insbesondere in der Fahrerkabine angeordnet sein kann. Über die Anzeigeeinrichtung 56 können die über die Drucksensoren 25, 40, 40', 40", 40''' und 54 gemessenen Druck- bzw. Spannungswerte angezeigt werden. Es ist erkennbar, daß jedes Überströmventil 30, 30', 30" und 30''' über das entsprechende Magnetventil 38, 38', 38", 38''' getrennt und unterschiedlich gesteuert werden kann. Damit ist es möglich, gezielt einzelne Kreise abzusperren, um in den anderen, nicht abgesperrten Kreisen die gewünschten Wirkungen herbeizuführen.

Im Gehäuse 1 kann ansonsten noch ein Temperaturfühler 57 und eine Heizeinrichtung 58 angeordnet sein. Die Heizeinrichtung dient insbesondere der Beheizung des Gehäuses 1 an der Stelle des Auslaßventils 8, um hier ein Einfrieren zu vermeiden.

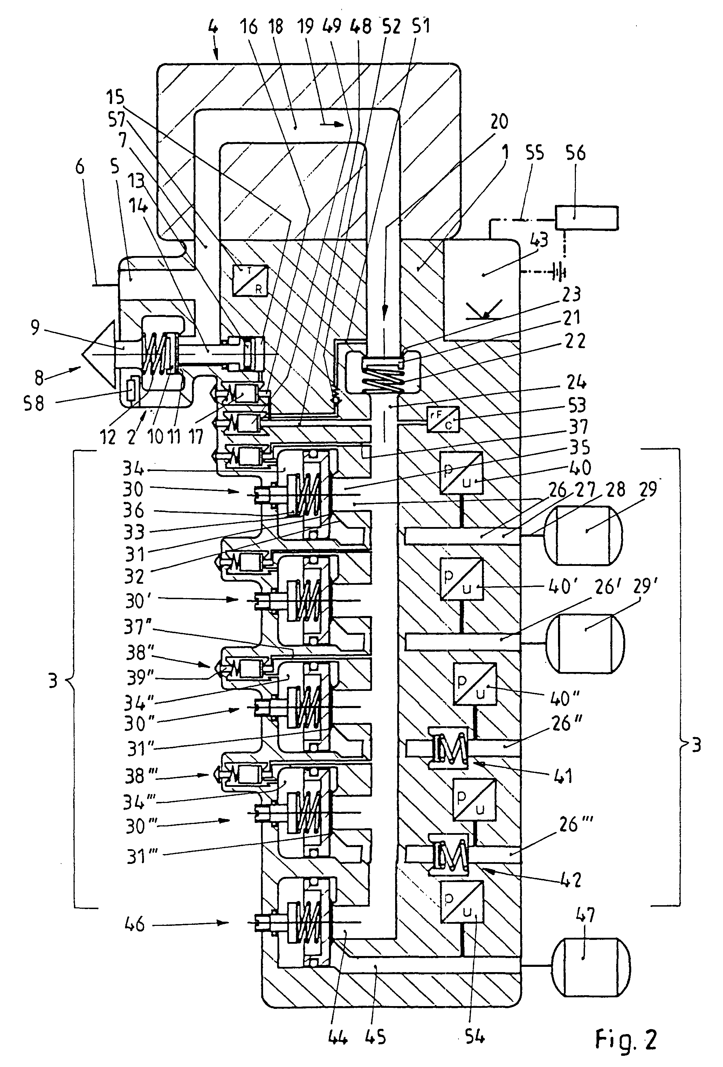

Die in Fig. 2 dargestellte Ausführungsform ist zunächst einmal ähnlich aufgebaut wie die Ausführungsform gemäß Fig. 1. Lediglich die Überströmventile 30, 30', 30" usw. sind etwas abgewandelt aufgebaut. Statt einer Membrankonstruktion ist hier eine Kolbenkonstruktion verwirklicht. Auch bei diesen Überströmventilen 30 usw. handelt es sich um Überströmventile mit begrenzter Rückströmung, bei denen der Schließdruck von dem Öffnungsdruck differiert, weil die jeweilige bewegliche Wand 31 vor dem Öffnen des Überströmventils 30 auf einer kleineren und nach dem Öffnen auf einer größeren Fläche angeströmt wird. Im übrigen ist erkennbar, daß die Kreise III und IV ohne Vorratsbehälter ausgebildet sind, d. h. die Leitungen 28" und 28''' führen direkt zu den jeweiligen Luftverbrauchern. Die Rückschlagventile 41 und 42 dienen der Druckbegrenzung und entnehmen die für die Kreise III und IV erforderliche Luft aus den Vorratsbehältern 29 bzw. 29'.

Es ist ohne weiteres vorstellbar, wie z. B. bei Auftreten eines Lecks in der Leitung 26' zum Vorratsbehälter 29' das betreffende Magnetventil 38' betätigt werden kann, so daß das Überströmventil 30' schließt. Die Kreise III und IV werden insoweit aus dem Vorratsbehälter 29 versorgt.

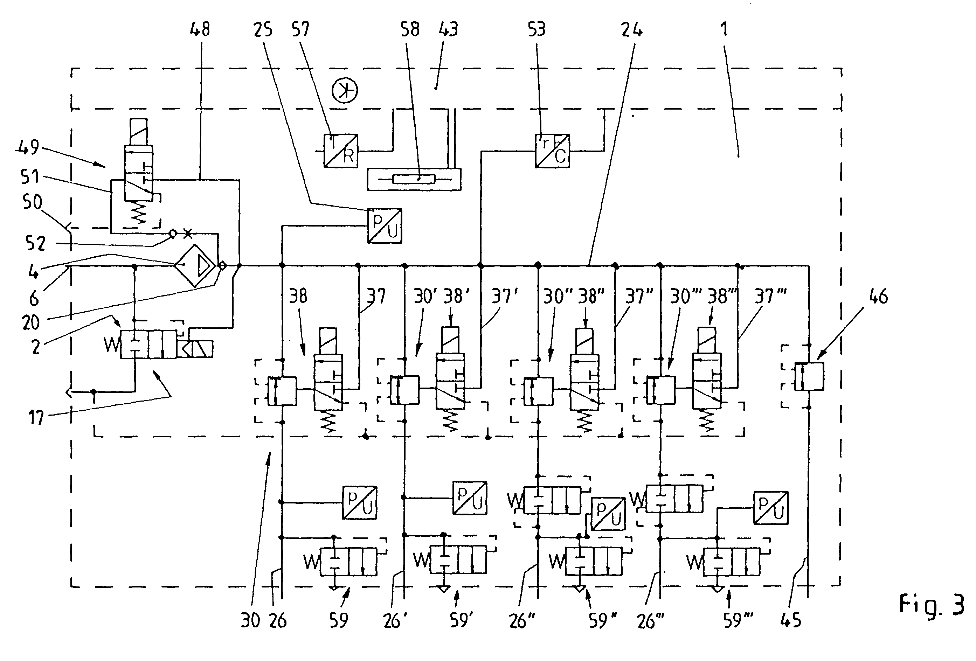

Fig. 3 zeigt einen Schaltplan der Druckluftaufbereitungseinrichtung unter Verwendung allgemeiner Symbole. Bezüglich der verwendeten Bezugszeichen wird auf die vorangehenden Ausführungen verwiesen. In der Zweigleitung 26 ist ein Sicherheitsventil 59 dem Drucksensor 40 parallelgeschaltet. Entsprechendes gilt für die Kreise II bis IV.

### BEZUGSZEICHENLISTE

- 1 -: Gehäuse
- 2 -: Druckregler
- 3 -: Mehrkreisschutzventil
- 4 -: Lufttrockner
- 5 -: Eingangsanschluß
- 6 -: Leitung
- 7 -: Durchtrittsraum
- 8 -: Auslaßventil
- 9 -: Auslaß
- 10 -: Ventilkörper

- 11 -: Rand
- 12 -: Feder
- 13 -: Kolben
- 14 -: Stößel
- 15 -: Druckkammer
- 16 -: Leitung
- 17 -: 3/2-Wege-Magnetventil
- 18 -: Granulatraum
- 19 -: Pfeil
- 20 -: Rückschlagventil

- 21 -: Ventilkörper
- 22 -: Feder
- 23 -: Rand
- 24 -: Einströmraum
- 25 -: Drucksensor
- 26 -: Zweigleitung
- 27 -: Anschluß
- 28 -: Leitung
- 29 -: Vorratsbehälter
- 30 -: Überströmventil

- 31 -: Wand
- 32 - R: and
- 33 -: Feder
- 34 -: Rückraum
- 35 -: Anströmraum
- 36 -: Federauflager
- 37 -: Umgehungsleitung
- 38 -: Magnetventil
- 39 -: Entlüftungsanschluß
- 40 -: Drucksensor

- 41 -: Rückschlagventil
- 42 -: Rückschlagventil
- 43 -: Steuerelektronik
- 44 -: Anschluß
- 45 -: Leitung
- 46 -: Überströmventil
- 47 -: Vorratsbehälter
- 48 -: Leitung
- 49 -: Magnetventil

- 50 -: Entlüftungsöffnung
- 51 -: Leitung
- 52 -: Rückschlagventil
- 53 -: Feuchtefühler
- 54 -: Drucksensor
- 55 -: el. Leitung
- 56 -: Anzeigeeinrichtung
- 57 -: Temperaturfühler
- 58 -: Heizeinrichtung
- 59 -: Sicherheitsventil

## Patentansprüche

1. Druckluftaufbereitungseinrichtung für Kraftfahrzeug-Druckluftanlagen mit einem Druckregler (2), einem Lufttrockner (4) und einem Mehrkreisschutzventil (3), die eine gemeinsame Baueinheit bilden, wobei das Mehrkreisschutzventil (3) für jeden Kreis (I, II, III usw.) ein Überströmventil (30, 30', 30'' usw.) mit begrenzter Rückströmung beinhaltet und jedes Überströmventil eine bewegliche Wand (31, 31', 31'' usw.) aufweist, die einen Anströmraum (35, 35', 35'' usw.) von einem Rückraum (34, 34', 34'' usw.) mit Feder (33, 33', 33'' usw.) abteilt, **dadurch gekennzeichnet**, daß zwischen Anströmraum (35, 35', 35'' usw.) und Rückraum (34, 34', 34'' usw.) zumindest eines Überströmventils eine die bewegliche Wand (31, 31', 31'' usw.) überbrückende Umgehungsleitung (37, 37', 37'' usw.) vorgesehen ist, und daß in jeder Umgehungsleitung jedes Überströmventils ein elektrisch ansteuerbares Magnetventil (38, 38', 38'' usw.) mit eigenem Entlüftungsanschluß (39, 39', 39'' usw.) angeordnet und so geschaltet ist, daß in erregtem Zustand das Magnetventil den Entlüftungsanschluß absperrt und den Anströmraum mit dem Rückraum verbindet und in nicht-erregtem Zustand den Anströmraum absperrt und den Rückraum mit der Atmosphäre verbindet.

2. Druckluftaufbereitungseinrichtung nach Anspruch 1, **dadurch gekennzeichnet**, daß als Magnetventil (38, 38', 38'' usw.) ein 3/2-Wege-Magnetventil vorgesehen ist.

3. Druckluftaufbereitungseinrichtung nach Anspruch 1, **dadurch gekennzeichnet**, daß in der von dem Überströmventil (30'', 30''') zumindest eines Kreises ausgehenden Leitung (26'', 26''') ein entgegen der Strömungsrichtung schließendes Rückschlagventil (41, 42) angeordnet ist.

4. Druckluftaufbereitungseinrichtung nach Anspruch 1, **dadurch gekennzeichnet**, daß für die Betätigung des oder der Magnetventile (30, 30', 30'' usw.) eine gemeinsame Steuerelektronik (43) vorgesehen ist, daß in den von den Überströmventilen ausgehenden Leitungen (26, 26', 26'' usw.) der betreffenden Kreise je ein Drucksensor (40, 40', 40'' usw.) vorgesehen ist, und daß die Magnetventile (30, 30', 30'' usw.) von der Steuerelektronik (43) in Abhängigkeit von den von den Drucksensoren (40, 40', 40'' usw.) erfaßten Drücken gesteuert werden.

5. Druckluftaufbereitungseinrichtung nach Anspruch 1 und 4, **dadurch gekennzeichnet**, daß der Lufttrockner (4) als regenerierbarer Trockner ausgebildet ist, der über die gemeinsame Steuerelektronik (43) gesteuert ist, und daß ein 3/2-Wege-Magnetventil (49) mit nachgeschaltetem Rückschlagventil (52) für die Regeneration vorgesehen ist.

6. Druckluftaufbereitungseinrichtung nach Anspruch 5, **dadurch gekennzeichnet**, daß zur Steuerung der Regeneration des Lufttrockners (4) ein Feuchtefühler (53) vorgesehen ist.

7. Druckluftaufbereitungseinrichtung nach Anspruch 1, **dadurch gekennzeichnet**, daß jedem Rückschlagventil (41, 42) je ein in die Atmosphäre öffnendes Sicherheitsventil (59, 59', 59'' usw.) nachgeschaltet ist, welches auf einen Öffnungsdruck zwischen dem Betriebsdruck des betreffenden Kreises und dem Öffnungsdruck des Auslaßventils (8) des Druckreglers (2) eingestellt ist.

8. Druckluftaufbereitungseinrichtung nach Anspruch 1, **dadurch gekennzeichnet**, daß die im Rückraum (34, 34', 34'' usw.) jedes Überströmventils (30, 30', 30'' usw.) angeordnete Feder (33, 33', 33'' usw.) auf einem einstellbaren Federauflager (36, 36', 36'' usw.) abgestützt ist.

## Claims

1. An apparatus for processing compressed air for compressed air systems in motor vehicles, comprising a pressure control unit (2), an air dryer unit (4) and a multi-circuit protection valve (3) together forming a common unit, the multi-circuit protection valve (3) including an overflow valve (30, 30',30" and so forth) for each circuit (I, II, III and so forth), the overflow valve (30, 30',30" and so forth) having a limited backflow and each overflow valve including a movable wall (31, 31', 31" and so forth) separating a flow chamber (35, 35', 35" and so forth) from a back chamber (34, 34', 34" and so forth) by a spring (33, 33', 33" and so forth), **characterized in** that a bypass conduit (37, 37', 37" and so forth) is located between the flow chamber (35, 35', 35" and so forth) and the back chamber (34, 34', 34" and so forth) of at least one overflow valve, the bypass conduit (37, 37', 37" and so forth) bypassing the movable wall (31, 31', 31" and so forth), and that an electrically controllable solenoid valve (38, 38', 38" and so forth) including its own deaerating connection (39, 39', 39" and so forth) is arranged in each bypass conduit of each overflow valve and it is connected in a way that the solenoid valve in the excited condition blocks the deaerating connection and that it connects the flow chamber with the back chamber and in a way that the solenoid valve in the non-excited condition blocks the flow chamber and that it connects the back chamber with the atmosphere.

2. The apparatus for processing compressed air of claim 1, **characterized in** that a 3/2-ways solenoid valve is provided as the solenoid valve (38, 38', 38" and so forth).

3. The apparatus for processing compressed air of claim 1, **characterized in** that a check valve (41, 42) closing against the flowing direction is arranged in the conduit (26", 26"') coming from the overflow valve (30", 30"') of at least one circuit.

4. The apparatus for processing compressed air of claim 1, **characterized in** that a common electronic control unit (43) for actuating the solenoid valve or the solenoid valves (30, 30', 30" and so forth) is provided, that a pressure sensor (40, 40', 40" and so forth) is provided in each of the conduits (26, 26', 26" and so forth) coming from the overflow valves of the respective circuits, and that the solenoid valves (30, 30', 30" and so forth) are being controlled by the electronic control unit (43) dependent on the pressures being sensed by the pressure sensors (40, 40', 40" and so forth).

5. The apparatus for processing compressed air of claim 1 and 4, **characterized in** that the air dryer (4) is designed as a regenerateable dryer being controlled via the common electronic control unit (43), and that a 3/2-ways solenoid valve (49) with a check valve (52) being connected downstream is provided for regeneration.

6. The apparatus for processing compressed air of claim 5, characterized in that a humidity sensor (53) is provided to control regeneration of the air dryer (4).

7. The apparatus for processing compressed air of claim 1, **characterized in** that a safety valve (59, 59', 59" and so forth) opening into the atmosphere is connected downstream of each check valve (41, 42), the safety valve (59, 59', 59" and so forth) being adjusted to an opening pressure of a value between the operating pressure of the respective circuit and the opening pressure of the outlet valve (8) of the pressure control unit (2).

8. The apparatus for processing compressed air of claim 1, **characterized in** that the spring (33, 33', 33" and so forth) being located in the back chamber (34, 34', 34" and so forth) of each overflow valve (30, 30', 30" and so forth) is supported on an adjustable spring support (36, 36', 36" and so forth).

## Revendications

1. Dispositif de traitement d'air comprimé pour installations d'air comprimé de véhicules automobiles, comportant un régulateur de pression (2), un séchoir à air (4) et une soupape de protection multicircuit (3), qui forment un ensemble commun, la soupape de protection multicircuit (3) contenant pour chaque circuit (I, II, III, etc.) une soupape de trop-plein (30, 30', 30", etc.) avec reflux limité et chaque soupape de trop-plein comportant une paroi mobile (31, 31', 31'', etc.) qui partage une chambre d'arrivée (35, 35', 35", etc.) d'une chambre de retour (34, 34', 34", etc.) avec ressort (33, 33', 33", etc.), caractérisé en ce qu'il est prévu, entre la chambre d'arrivée (35, 35', 35", etc.) et la chambre de retour (34, 34', 34", etc.), d'au moins une soupape de trop-plein, une conduite de contournement (37, 37', 37", etc.) qui court-circuite la paroi mobile (31, 31', 31'', etc.), et en ce que dans chaque conduite de contournement de chaque soupape de trop-plein, il est disposé une soupape magnétique (38, 38', 38", etc.) à commande électrique, avec son propre raccord de purge d'air (39, 39', 39", etc.), laquelle est montée dans le circuit de manière qu'à l'état excité, la soupape magnétique ferme le raccord de purge d'air et relie la chambre d'arrivée à la chambre de retour, et qu'à l'état non excité, elle ferme la chambre d'arrivée et relie la chambre de retour à l'atmosphère.

2. Dispositif de traitement d'air comprimé selon la revendication 1, caractérisé en ce qu'il est prévu une soupape magnétique à 3/2 voies comme soupape magnétique (38, 38', 38", etc.).

3. Dispositif de traitement d'air comprimé selon la revendication 1, caractérisé en ce que dans la conduite (26'',26'''), qui part de la soupape de trop-plein (30", 30''') d'au moins un circuit, il est disposé un clapet de non-retour (41, 42) qui se ferme dans le sens opposé au sens d'écoulement.

4. Dispositif de traitement d'air comprimé selon la revendication 1, caractérisé en ce que pour l'actionnement de la ou des soupape(s) magnétique(s) (30, 30', 30", etc.) il est prévu une électronique de commande (43) commune, et en ce que dans chacune des conduites (26, 26', 26", etc.) des circuits concernés, partant des soupapes de trop-plein, il est prévu un capteur de pression (40, 40', 40", etc.), et en ce que les soupapes magnétiques (30, 30', 30", etc.) sont commandées par l'électronique de commande (43) en fonction des pressions détectées par les capteurs de pression (40, 40', 40'', etc.).

5. Dispositif de traitement d'air comprimé selon les revendications 1 et 4, caractérisé en ce que le séchoir à air (4) est conçu en tant que séchoir régénérable qui est commandé par l'intermédiaire de l'électronique de commande (43) commune, et en ce qu'une soupape magnétique à 3/2 voies (49) avec clapet de non-retour (52) monté en aval, est prévue pour la régénération.

6. Dispositif de traitement d'air comprimé selon la revendication 5, caractérisé en ce qu'une sonde d'humidité (53) est prévue pour la commande de la régénération du séchoir à air (4).

7. Dispositif de traitement d'air comprimé selon la revendication 1, caractérisé en ce que derrière chaque clapet de non-retour (41, 42) est montée une soupape de sûreté (59, 59', 59", etc.) qui s'ouvre vers l'atmosphère et qui est réglée sur une pression d'ouverture entre la pression de service du circuit concerné et la pression d'ouverture de la soupape d'échappement (8) du régulateur de pression (2).

8. Dispositif de traitement d'air comprimé selon la revendication 1, caractérisé en ce que le ressort (33, 33', 33", etc.) disposé dans la chambre de retour (34, 34', 34", etc.) de chaque soupape de trop-plein (30, 30', 30", etc.) s'appuie sur un support de ressort (36, 36', 36'', etc.) réglable.
